# EUROPEAN PATENT APPLICATION

(11) **EP 4 844 971 A1**
(43) Date of publication of application: **25.11.2026**
(21) Application number: 26156518.8
(22) Date of filing: 05.02.2026
(51) Int. Cl.: H02J 3/14

(54) **DYNAMICALLY CONTROLLING DATACENTER LOAD**

(30) Priority: 20.05.2025 US 202519213148
(71) Applicant: Microsoft Technology Licensing, LLC, Redmond, WA 98052 (US)
(72) Inventor: HEATH, SCOT EDWARD, Redmond, 98052 (US); MAHALINGAM, NITHISH, Redmond, 98052 (US); BELMONT VELAZQUEZ, MARIA DE LA LUZ, Redmond, 98052 (US); WARRIER, BRIJESH, Redmond, 98052 (US); CHOUKSE, ESHA, Redmond, 98052 (US)
(74) Representative: CMS Cameron McKenna Nabarro Olswang LLP

(57) **Abstract**

Methods, apparatus, and systems for dynamically controlling datacenter load include monitoring spectral content of a load presented at a common point of coupling between datacenter power and an electrical grid and dynamically adjusting a power floor of the load based on the monitored spectral content.

## Description

### BACKGROUND

Datacenters contain IT (Information Technology) infrastructure, often housed in racks, that includes compute, storage, networking, and other devices. Many of these devices consume power. The power load presented by the datacenter device on the source of electricity for the datacenter, typically a grid-based power source like a power station, can vary over time. Additionally, the load can be relatively high given the density of power consuming deices in a datacenter. In some instances, the load can vary at a frequency that causes damage at the source. For example, load fluctuations at some frequencies can cause torsional oscillations on a prime mover or a shaft of a generator. In some instances, such torsional oscillations can result in distortions, deformations, or failure of the prime mover, shaft, or other associated mechanisms.

As the density of power consuming devices within a datacenter increases, the magnitude of the load presented on an electrical grid by the power consuming devices of the datacenter also increases. Additionally, some datacenter workloads, such as Artificial Intelligence (AI)-related workloads, have a tendency toward varying demand for compute, which often leads to a variable power demand. For example, model training or image classification workloads tend to have somewhat periodic compute demand. As such there is a possibility that, due to the variability of a datacenter's power load, the prime mover or shaft of a power generator of the electric grid providing power to the datacenter could be damaged.

### SUMMARY

Described in this specification are methods, apparatus, and systems for dynamically controlling datacenter load according to various embodiments described herein. Methods for controlling such a datacenter load include monitoring spectral content of a load presented at a common point of coupling between datacenter power and an electrical grid and dynamically adjusting a power floor of the load based on the monitored spectral content.

An apparatus configured for dynamically controlling datacenter load according to various embodiments described herein includes a processing device and a memory. The memory is operatively coupled to the processing device and stores instructions that, when executed, perform operations including: monitoring a signal representative of a load presented at a common point of coupling of datacenter power and an electrical grid, identifying a spectral content of the load from the signal, and dynamically adjusting a power floor of the load based on the spectral content of the load.

A system configured for dynamically controlling datacenter load according to various embodiments described herein includes a plurality of power consuming devices and a power monitoring device. The power monitoring device is operatively coupled, in a closed loop, to the power consuming devices and also to a common point of coupling of datacenter power and electrical grid. The power monitoring device performs operations including monitoring a signal representative of a load presented at the common point of coupling, identifying a spectral content of the load from the signal, and dynamically adjusting a power floor of the load based on the spectral content of the load.

### BRIEF DESCRIPTION OF DRAWINGS

FIG. 1 illustrates a block diagram of an example system that includes a datacenter configured in accordance with some embodiments of the present disclosure.
FIG. 2 illustrates a block diagram of the datacenter of FIG. 1 in greater detail.
FIG. 3 sets forth a flow chart illustrating an example method of dynamically controlling datacenter load in accordance with embodiments of the present disclosure.
FIG. 4 sets forth a flow chart illustrating another example method of dynamically controlling datacenter load in accordance with embodiments of the present disclosure that takes into account a magnitude of the load.
FIG. 5 sets forth a flow chart illustrating a method of dynamically controlling datacenter load in accordance with various embodiments of the present disclosure.
FIG. 6 sets forth a flow chart illustrating another example method of dynamically controlling datacenter load in accordance with embodiments of the present disclosure.
FIG. 7 illustrates an exemplary computing device that may be specifically configured to perform one or more of the processes described herein.

### DESCRIPTION OF EMBODIMENTS

Some workloads, such as AI workloads, executed with IT equipment in a datacenter present varying power loads. The frequencies at which such a load varies may not be known prior to workload deployment or execution. However, some of the frequencies at which the power load varies may result in damage to infrastructure of an electrical grid-based power system providing power to the datacenter. In some embodiments, a static, minimum power floor may be set such that the load presented at the datacenter to the electrical grid is unlikely to vary at a frequency that causes damage, or the magnitude of such variations is below a level at which damage might be introduced.

Such a minimum power floor, as described herein, is a minimum power load that can be presented by datacenter devices at a common point of coupling between the datacenter and an electrical grid. Said another way, a minimum power floor is a minimum possible magnitude of a datacenter load. For example, if a power floor is set to 25MW (megawatts), the load of a datacenter will be held at or above 25MW, even if with no power floor the load of a datacenter during execution of a workload could drop to 21MW. Such a minimum power floor may be implemented in a variety of ways. As one example, devices within the datacenter, such as GPUs (Graphics Processing Units), may be set to execute dummy workload (workload with little to no useful output other than power consumption) when otherwise engaged. Consider an example in which, without a minimum power floor, datacenter devices may present a load on the electrical grid anywhere between 20MW and 30MW. Setting a minimum power floor of 29MW restricts load fluctuations to values between 29MW and 30MW. Frequencies of load fluctuation that would have been experienced with no power floor may either not be presented when the power floor is set to 29MW or may be presented but with a magnitude of 1MW or less. While such a minimum power floor serves to reduce the possibility of damaging frequencies of load fluctuations, such a minimum power floor, given its constant and static nature, may also result in wasted power consumption.

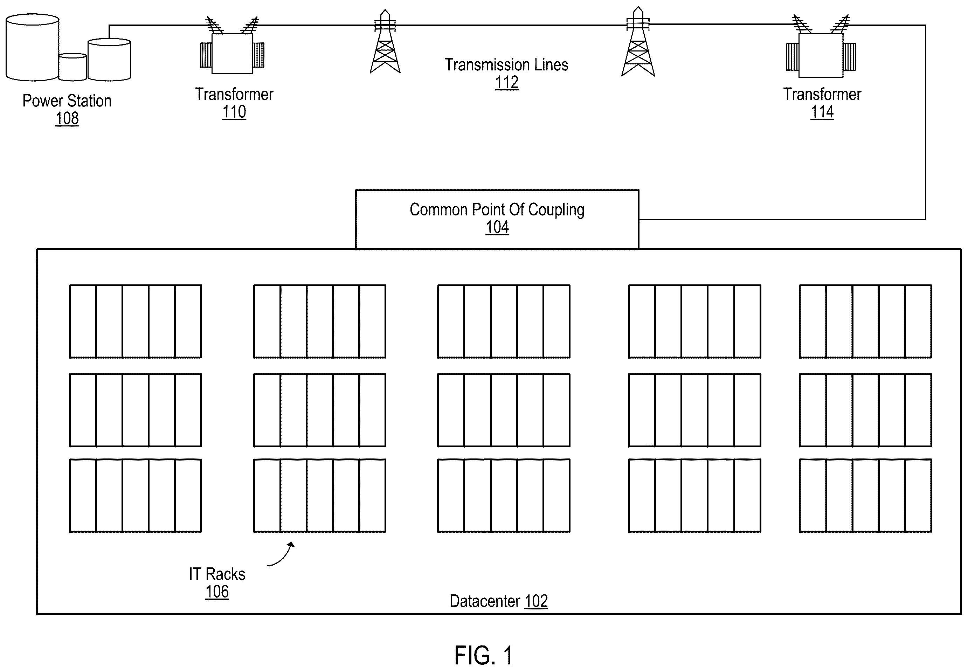

Presented in this disclosure are various examples of methods, apparatus and systems configured for dynamic control of datacenter load. For further explanation, FIG. 1 illustrates a block diagram of an example system that includes a datacenter configured in accordance with some embodiments of the present disclosure. The example datacenter 102 of FIG. 1 includes a number of IT racks106 that include one or more power consuming devices. Such power consuming devices may include servers, clusters, storage, networking devices, and the like.

IT racks in a datacenter are utilized to organize and house various IT devices including, for example, compute resources like CPU-based servers and GPU-based servers, as well as networking devices, and storage devices. Racks, typically made from sturdy metal, are often tall, vertical enclosures. Such racks may be built to a standardized width, such as 19 inches, to accommodate different types of equipment in a uniform way. Each rack is divided into units, commonly called a 'U,' where 1U is 1.75 inches in height, allowing for precise configuration based on the height of the devices (number of U's) being installed. Some IT racks may be high-bay racks. A high-bay rack may be double (or greater) the height of other conventional IT racks. Such high-bay racks increase the density of power demand by enabling a greater number of power consuming devices to be installed in the same footprint as a conventional IT rack.

Power is supplied to the power consuming devices of the IT racks 106 via an electrical grid. The electrical grid in the example of FIG. 1 includes a power station 108, which provides power to one or more transformers 110. The transformers 110 step up the power provided by the power station 108 to a high or extra high voltage level for transmission at relatively long distances over transmission lines 112. The power carried at the high or extra high voltage level across the transmission lines 112 is stepped down at a transferer 114 to a medium voltage level which is provided, via a common point of coupling 104, to the datacenter 102. The datacenter 102 includes various equipment and architecture to distribute the power received at the common point of coupling 104 to the power consuming devices of the IT racks 106. For example, the datacenter may include additional transformers, AC to DC and DC to AC converters, circuit breakers, power distribution units (PDUs), and the like.

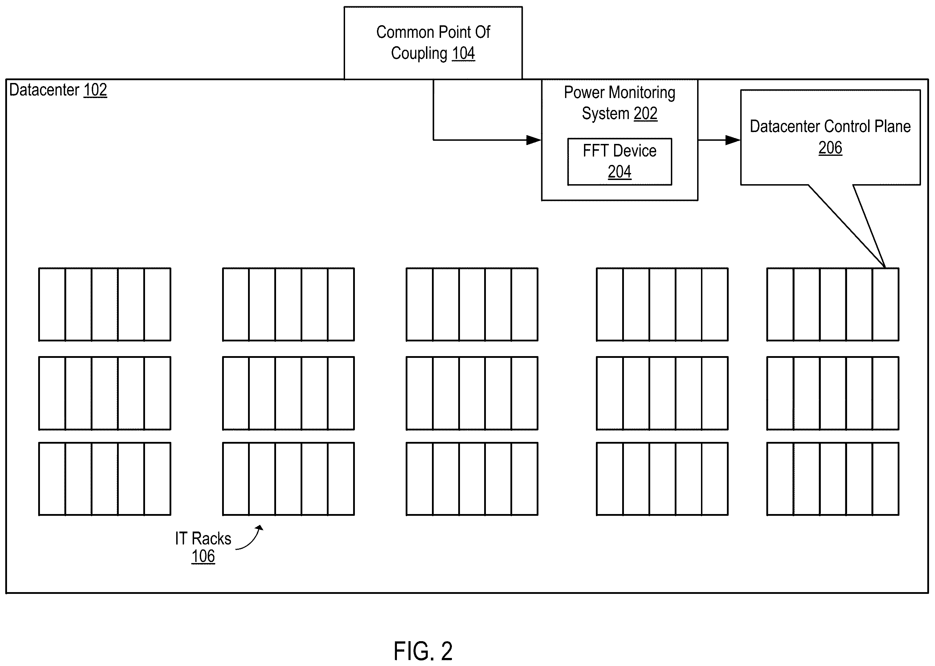

The power consuming devices of the IT racks 106 may execute various workloads. In some embodiments, for example, an AI related workload, such as a training workload, may be executed utilizing compute resources of the IT racks 106. Such workloads, as mentioned above, may present fluctuating load to the electrical grid. Some of the frequencies of such fluctuations may cause damage to various components of the power station 108. To that end, the datacenter 102 of FIG. 1 may be configured with one or more devices that enable dynamic control of the power load presented at the common point of coupling 104 between the datacenter and the electrical grid as shown below in greater detail with respect to FIG. 2

FIG. 2 depicts the datacenter of FIG. 1 in greater detail. In FIG. 2, the datacenter 102 includes a power monitoring system 202. The example power monitoring system 202 of FIG. 2 may be computing hardware and software configured for dynamic control of the power load of the datacenter according to embodiments of the present disclosure. To that end, the power monitoring system may be coupled to the common point of coupling 104 to continually monitor, in real-time or near-real-time, the present load presented on the electrical grid by the power consuming devices of the datacenter 102. Additionally, the power monitoring system 202 of FIG. 2 is also coupled to a datacenter control plane 206.

A datacenter control plane as the term is used here refers to a system for managing and orchestrating datacenter network traffic including routing, configuration and resource allocation. A control plane generally ensures data flows efficiently and securely through a network, utilizing routing protocols and algorithms. A control plane may also manage various operations and parameters of IT devices in the datacenter. In the example of FIG. 2, the datacenter control plane may implement a power floor in various power consuming devices such as CPU or GPU-based servers. The datacenter control plane may be coupled for data communications to IT rack managers which, in turn, may be coupled to servers via one or more BMCs (Baseboard management controllers).

The example power monitoring system 202 of FIG. 2 also includes an FFT (Fast Fourier Transform) device 204. An FFT device is a computing device that performs an FFT on a signal. An FFT is a computational method used to analyze a signal by breaking the signal down into its underlying frequency components. The FFT computation transforms the signal from the time domain, where the signal is represented as it changes over time, into the frequency domain, where the signal is described by the different frequencies that compose it.

In the time domain, a signal is a sequence of data points representing how some quantity (like voltage, current, or power usage) varies over time. In this disclosure the signal represents the load of the datacenter presented to the electrical grid at the common point of coupling between the datacenter power and the grid. Many signals are composed of multiple overlapping waves or patterns, each oscillating at a different rate. The FFT efficiently identifies these patterns by expressing the signal as a sum of sinusoidal functions, each associated with a specific frequency and intensity (or magnitude).

The output of an FFT includes one or more frequencies that are present in the signal, amplitudes or magnitudes indicating of each frequency present in the signal, and phases representing the relative alignment of each frequency component.

The FFT works by examining the signal as a whole and re-expressing it in terms of how much of each frequency is present, even if those frequencies are not directly obvious from looking at the original signal. This technique is useful for identifying periodic fluctuations of a datacenter's power load variations and helps diagnose or mitigate issues that may be associated with specific frequency behaviors.

The FFT device 204 is utilized by the power monitoring system to determine the spectral content of the load presented at the common point of coupling 104. The term 'spectral content' refers to the distribution of a signal's energy across different frequencies. In other words, the spectral content is essentially the fingerprint of a signal in the frequency domain, revealing what frequencies are present and with what intensity (or magnitude).

The power monitoring system 202 of FIG. 2 is configured to dynamically control datacenter load by monitoring, through use of the FFT device 204, the spectral content of the load presented at the common point of coupling between the datacenter power and the electrical grid and adjust a power floor of the load based on the monitored spectral content. In some embodiments, for example, the power monitoring system 202 of FIG. 2 may initially set a power floor to a relatively high level, one previously determined to be high enough so as to prohibit frequencies that may cause damage to the electrical grid from being presented. The power monitoring system may send various commands to the datacenter control plane 206 to effect a change in the power floor.

The power monitoring system 202 may periodically determine a frequency of the load and reduce the power floor by a predefined amount if the determined frequency is within a permissible range of frequencies. The permissible range of frequencies may represent frequencies that are known not to cause damage to the power station of the electrical grid. In this way, the power floor can be periodically reduced as long as the load presented at the common point of coupling does not present frequencies that are likely to cause damage to the power station of the electrical grid.

In some embodiments, if a frequency of the load is determined to be outside of a range of permissible frequencies (or, said another way, in a range of impermissible frequencies), the power monitoring system 202 may increase the power floor by a predetermined amount. In some embodiments, the predetermined amount by which the power floor is increased is a relatively small amount, such as to the previous power floor level. In other embodiments, the power monitoring system 202 may increase the power floor back to the initial level. In this way, the power floor of the datacenter load can be monitored in real or near real-time and the power floor set can be dynamically adjusted, up and down. As the power floor decreases without any frequencies that may cause damage to the power station equipment of the electrical grid, the datacenter load becomes more efficient.

The power monitoring system operates as part of a 'closed loop' feedback system. Such a closed-loop feedback system may continuously monitor the electrical load and adjusts a power floor level in response to spectral characteristics of the load signal. This closed-loop architecture may include various components. For example, the closed-loop architecture may include a signal acquisition system for sampling power data at the common point of coupling; an FFT-based spectral analysis system for determining the frequency content of the load signal; a control logic system that compares frequency components and their magnitudes to predefined permissible ranges and damage risk thresholds; a decision engine for determining whether to raise, lower, or maintain the power floor; a command issuance system that communicates with a datacenter control plane to initiate or halt dummy workloads, adjust power draw via auxiliary systems, or otherwise implement a power policy; and a feedback system that re-evaluates the updated or modified load to determine the effect of the control action and continue the regulation cycle. Such a closed-loop feedback system may operate in fixed time intervals or use event-driven logic, such as triggering spectral analysis and adjustment only when significant load deviation is detected.

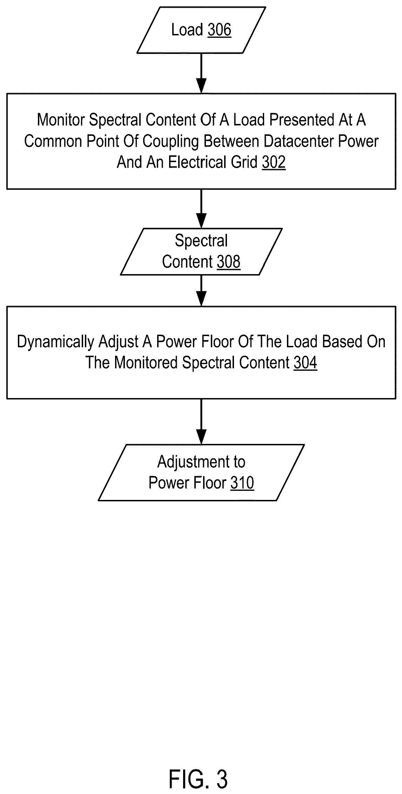

For further explanation, FIG. 3 sets forth a flow chart illustrating an example method of dynamically controlling datacenter load in accordance with embodiments of the present disclosure. The method of FIG. 3 includes monitoring 302 spectral content of a load 306 presented at a common point of coupling between datacenter power and an electrical grid. In some embodiments, monitoring 302 spectral content of a load 306 includes processing a signal representing the load with an FFT device to identify one or more frequencies of the signal. In some embodiments monitoring 302 spectral content of the load 306 may be carried out using amplitude modulation and demodulation. Other signal processing techniques may also be employed including STFT (Short-Time Fourier Transform), DWT (Discrete Wavelet Transform), Cepstral Analysis, and the like.

The method of FIG. 3 also includes dynamically adjusting 304 a power floor of the load based on the monitored spectral content. Adjusting 304 a power floor may be carried out by sending one or more commands representing power floor adjustments 310 to a datacenter control plane or other management device. The datacenter control plane may instruct various hardware components to implement a power policy by sending one or more commands to a rack manager which will distribute commands to effect the power policy via one or more baseboard management controllers (BMCs) to GPUs and/or CPUs of servers or other devices in the reck. Alternatively, the datacenter control plane may cause dummy workload to be injected to increase power consumption. In yet another example, a power floor can be adjusted by increasing or decreasing power consumption of a source other than the compute devices of the datacenter. For example, use of grid-connected battery arrays, electrolysis systems, or water heating systems may be increased or decreased to modify the load presented at the common point of coupling in the datacenter.

Grid-connected battery arrays, such as lithium-ion or flow batteries, may be charged to absorb power and modify the overall load of the datacenter. In addition, the batteries may be utilized at times when the power floor is low. In this way, the energy previously consumed to meet the power floor can be utilized efficiently.

Electrolysis systems may be integrated within or alongside a datacenter as controllable, non-IT power-consuming subsystems capable of modulating overall electrical load. An electrolysis system generally includes an electrolyzer unit configured to split water into hydrogen and oxygen gases using electrical energy. The electrolyzer may be of various types, such as proton exchange membrane (PEM), alkaline, or solid oxide, and may be coupled with gas handling, storage, or downstream conversion infrastructure. These systems can be dynamically controlled in terms of their power intake, making them suitable for use as auxiliary power sinks that do not contribute to computational output but serve other operational or economic purposes, such as hydrogen production for backup fuel or energy resale.

In the context of datacenter load shaping, electrolysis systems may be operated under command of a datacenter control plane or power monitoring system. When the instantaneous power load of the datacenter drops below a specified power floor, the electrolysis system may be activated or throttled up to draw additional power, thereby raising the total load presented to the electrical grid. Conversely, when the datacenter's IT workload increases, the electrolysis system can be throttled down or paused to avoid exceeding grid constraints or unnecessary energy usage. Because the power draw of electrolysis units can be finely controlled and is inherently resistive and stable, these systems provide a responsive and predictable means of maintaining a consistent datacenter load profile while producing useful byproducts rather than dissipating excess power wastefully.

Water heating systems may also be employed as controllable auxiliary power-consuming systems within a datacenter environment to assist in maintaining a desired power floor. These systems typically consist of resistive or induction-based water heaters coupled to thermal storage tanks, piping infrastructure, and temperature control mechanisms. Unlike traditional HVAC components, which are primarily driven by environmental conditions, these water heating systems can be modulated in real time to absorb excess electrical energy without reliance on external thermal demand. When a datacenter's IT workload drops below a predetermined power floor, the water heating system may be activated or its power level increased to consume additional electrical power (and meet the power floor that is currently set). Conversely, during periods of higher IT load, the heating system can be throttled down or temporarily disabled. Because water has a high thermal capacity, heated water can be stored for delayed usage (e.g., in sanitation, facility heating, or recirculation systems), allowing power drawn by the heating system to be decoupled from immediate thermal needs. This controllable and non-critical load path provides a practical, non-wasteful mechanism for smoothing power fluctuations and maintaining compliance with grid stability requirements.

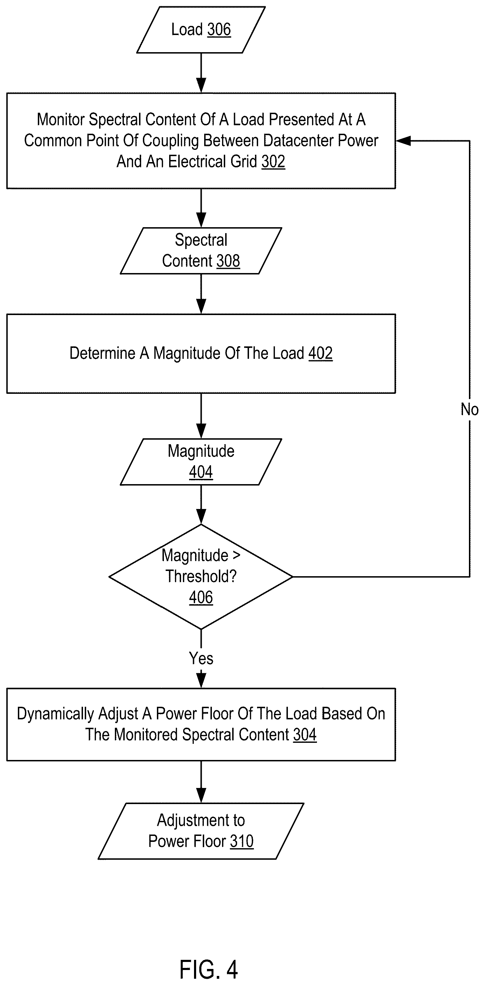

For further explanation, FIG. 4 sets forth a flow chart illustrating another example method of dynamically controlling datacenter load in accordance with embodiments of the present disclosure that takes into account a magnitude of the load. FIG. 4 depicts an enhanced version of the load control method above in in FIG. 3 in that both the frequency and the magnitude of load fluctuations are considered in adjusting the datacenter power floor. This approach offers a more nuanced control strategy by recognizing that not all frequencies are harmful unless accompanied by sufficiently high amplitude. The method enables a more energy-efficient system by avoiding unnecessary power floor increases when low-magnitude fluctuations occur at otherwise risky frequencies.

The method of FIG. 4 differs from FIG. 3, in that, the method of FIG. 4 also includes determining 402 a magnitude 404 of the load. That is, in addition to determining frequencies present in a signal representing the load (from the spectral content 308), the method of FIG. 4 also includes determining a magnitude of the load at those frequencies. In some embodiments, even if a load fluctuates at a frequency known to potentially damage electrical grid equipment, it may not actually cause harm unless the magnitude of the load exceeds a particular threshold. To that end, the method of FIG. 4 continues by determining 406 whether the magnitude 404 exceeds a predetermined threshold. If the magnitude exceeds the threshold and the spectral content indicates a frequency within a range of impermissible frequencies (those likely to cause damage to electrical grid equipment), then the method of FIG. 4 continues by adjusting 304 the power floor. In this scenario, adjusting 304 the power floor includes increasing the power floor. If the magnitude does not exceed the threshold, then the method does not make any adjustments to the power floor, regardless of whether a frequency is present in the spectral content of the load fluctuations which falls into an impermissible range of frequencies.

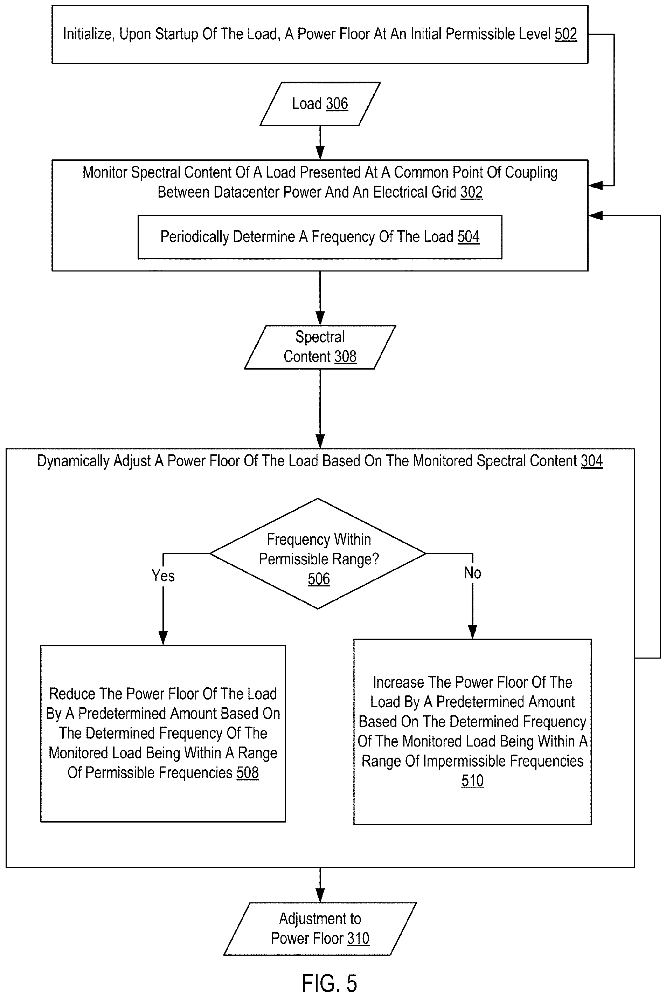

FIG. 5 sets forth a flow chart illustrating a method of dynamically controlling datacenter load in accordance with various embodiments of the present disclosure. The method depicted in FIG. 5 represents a time-based dynamic adjustment strategy in which the power floor is initialized at a safe baseline level and is gradually adjusted in increments depending on whether monitored frequency content remains within acceptable ranges. This method provides a tunable, progressive control loop that balances protection against damaging frequencies with reduction of power waste over time. It is particularly effective for systems where changes in load behavior are expected to evolve gradually.

The method of FIG. 5 includes initializing 502, upon startup of a load in a datacenter, a power floor at an initial permissible level. The initial permissible level is a power floor level that is high enough so as to eliminate (or nearly eliminate) any possibility of damage introduced by particular frequencies present in load fluctuations. This initial permissible level may also be thought of as a 'safe level' or 'safe power floor' at which the power floor can be set and the load fluctuations can be expected to present little or no frequencies and/or magnitudes capable of introducing damage to a power station of the electrical grid.

In the method of FIG. 5, monitoring 302 the spectral content of the load includes periodically determining 504 a frequency of the load. Such a periodic determination may be carried out by applying an FFT to a signal representing the real time load presented at the common point of coupling of the datacenter or by performing various demodulation techniques on such a signal.

Also in the method of FIG. 5, dynamically adjusting 304 a power floor of the load includes determining 506 whether the frequency of the load is within a permissible range. If the frequency is within a permissible range, the method of FIG. 5 continues by reducing 508 the power floor of the load by a predetermined amount. The process can repeat, effectively reducing over time the power floor as long as no impermissible frequencies are determined in the load. That is, as long as the load does not vary at a frequency which may potentially cause damage to upstream electrical equipment at the electrical grid, the power floor can periodically be reduced.

If, however, a frequency of the load is determined 506 not to be within a permissible range, the method of FIG. 5 continues by increasing 510 the power floor of the load by a predetermined amount. In some embodiments, the predetermined amount at which the power floor is increased 510 may be equivalent to the predetermined amount at which the power floor is decreased over time when frequencies of the load are within permissible ranges. If, for example, the power floor is decreased over time by 1MW every 60 seconds as long as the frequencies of the load are within permissible ranges, then the power floor may be increased, in some embodiments, by 1MW when a frequency of the load is determined to be in an impermissible range of frequencies. In this way, the power floor may decrease regularly over time in predefined increments and may increase over time in the same predefined increments.

In some other embodiments, increasing 510 the power floor may be carried out by increasing the power floor to the initial permissible level. Rather than increasing the power floor by a single increment when detecting a frequency that falls within an impermissible frequency range, power floor may be immediately reset to the safe level of the initial power floor for a more conservative approach.

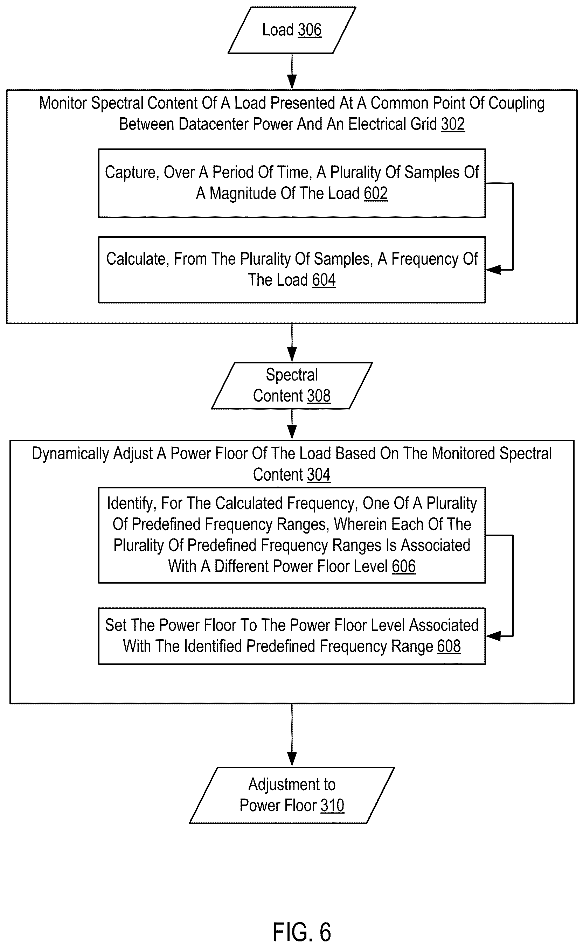

FIG. 6 sets forth a flow chart illustrating another example method of dynamically controlling datacenter load in accordance with embodiments of the present disclosure. The method of FIG. 6 utilizes categories of datacenter load behavior into predefined frequency bands, each associated with a specific power floor level. This approach enables immediate and discrete adjustments to the power floor by mapping current load frequency to a risk category (e.g., low, moderate, high damage potential). Unlike incremental methods, this frequency-binning strategy allows for flexible and responsive control that can quickly adapt to changing power usage patterns and grid sensitivities.

In the method of FIG. 6, monitoring 302 spectral content 308 of a load 306 presented at a common point of coupling between datacenter power and an electrical grid includes capturing 602, over a period of time, a plurality of samples of a magnitude of the load and calculating 604, from the plurality of samples, a frequency of the load.

In the method of FIG. 6, adjusting 304 the power floor of the load includes identifying 606, for the calculated frequency, one of a plurality of predefined frequency ranges. In the example of FIG. 6, each of the plurality of predefined frequency ranges is associated with a different power floor level. In such an embodiment, adjusting 304 the power floor of the load includes setting 608 the power floor to the power floor level associated with the identified predefined frequency range.

Frequencies of the load within some frequency ranges may represent different levels of potential damage to the power station of the electrical grid. Some frequency ranges for example may represent no potential damage to the power station, while others may represent moderate or severe potential damage. In the example of FIG. 6, when the identified frequency of the load is within a frequency range representing no potential damage to the electrical grid power station, the method of FIG. 6 may set 608 the power floor to the lowest possible power floor, thereby reducing to the maximum extent possible, inefficient power consumption related to the power floor. Unlike some of the examples above in which the power floor is periodically reduced over time as there is no continued indication of potentially damaging frequencies present in the load, the method of FIG. 6 may result in the power floor being set to any level, at any time, dependent upon the frequency ranges within which the frequency of the load falls.

The flow charts described above present various methods for controlling the datacenter load based on frequency of the load variations. Any of the methods described above may be implemented separately. Readers will recognize also, that any of the methods may be implemented in conjunction with one another. For example, a system configured for dynamically controlling datacenter load according to embodiments of the present disclosure may alternate between the method of time-based, periodic incrementing and decrementing of the power floor and the method described above in which particular power floors are implemented for particular frequencies determined to be within the datacenter load fluctuation.

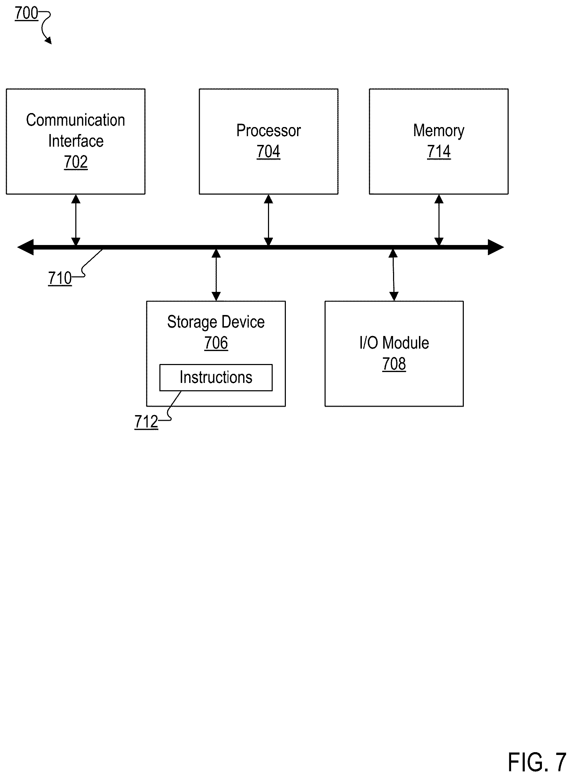

For further explanation, FIG. 7 illustrates an exemplary computing device 700 that may be specifically configured to perform one or more of the processes described herein. More specifically, the example computing device 700 in FIG. 7 may operate to dynamically control datacenter load in accordance with the methods described above. As shown in FIG. 7, computing device 700 may include a communication interface 702, a processor 704, a storage device 706, an input/output (I/O) module 708, and computer memory 714 communicatively connected one to another via a communication infrastructure 710. While an exemplary computing device 700 is shown in FIG. 7, the components illustrated in FIG. 7 are not intended to be limiting. Additional or alternative components may be used in other embodiments. Components of computing device 700 shown in FIG. 7 will now be described in additional detail.

Communication interface 702 may be configured to communicate with one or more computing devices. Examples of communication interface 702 include, without limitation, a wired network interface (such as a network interface card), a wireless network interface (such as a wireless network interface card), a modem, an audio/video connection, and any other suitable interface.

Processor 704 generally represents any type or form of processing unit capable of processing data and/or interpreting, executing, and/or directing execution of one or more of the instructions, processes, and/or operations described herein. Processor 704 may perform operations by executing computer-executable instructions 712 (e.g., an application, software, code, and/or other executable data instance) stored in storage device 706.

Storage device 706 may include one or more data storage media, devices, or configurations and may employ any type, form, and combination of data storage media and/or device. For example, storage device 706 may include, but is not limited to, any combination of non-volatile media and/or volatile media. Electronic data, including data described herein, may be temporarily and/or permanently stored in storage device 706. For example, data representative of computer-executable instructions 712 configured to direct processor 704 to perform any of the operations described herein may be stored within storage device 706. In some examples, data may be arranged in one or more databases residing within storage device 706.

I/O module 708 may include one or more I/O modules configured to receive user input and provide user output. I/O module 708 may include any hardware, firmware, software, or combination thereof supportive of input and output capabilities. For example, I/O module 708 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 708 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 708 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 700.

Advantages and features of the present disclosure can be further described by the following statements:
Statement 1. A method of dynamically controlling datacenter load, comprising: monitoring spectral content of a load presented at a common point of coupling between datacenter power and an electrical grid; and dynamically adjusting a power floor of the load based on the monitored spectral content.\
Statement 2 The method of any combination of one or more of the statements above, further comprising: determining a magnitude of the load; and dynamically adjusting the power floor of the load only if the magnitude exceeds a predefined threshold.
Statement 3. The method of any combination of one or more of the statements above, wherein monitoring spectral content of the load further comprises calculating the spectral content with a Fast Fourier Transform (FFT) device.
Statement 4. The method of any combination of one or more of the statements above, wherein: monitoring spectral content of the load further comprises capturing, over a period of time, a plurality of samples of a magnitude of the load and calculating, from the plurality of samples, a frequency of the load; and dynamically adjusting the power floor of the load further comprises: identifying, for the calculated frequency, one of a plurality of predefined frequency ranges, wherein each of the plurality of predefined frequency ranges is associated with a different power floor level; and setting the power floor to the power floor level associated with the identified predefined frequency range.
Statement 5. The method of any combination of one or more of the statements above, further comprising: initializing, upon startup of the load, a power floor at an initial permissible level, wherein: monitoring the spectral content of the load further comprises periodically determining a frequency of the load; and dynamically adjusting a power floor of the load further comprises reducing the power floor of the load by a predetermined amount based on the determined frequency of the monitored load being within a range of permissible frequencies.
Statement 6. The method of any combination of one or more of the statements above, further comprising: increasing the power floor of the load by a predetermined amount based on the determined frequency of the monitored load being within a range of impermissible frequencies.
Statement 7. The method of any combination of one or more of the statements above, wherein increasing the power floor further comprises increasing the power floor to the initial permissible level.
Statement 8. The method of any combination of one or more of the statements above, wherein adjusting the power floor comprises: instructing a datacenter control plane to modify a power floor of one or more power consuming devices of the datacenter, wherein the datacenter control plane is coupled for data communications to a plurality of power consuming devices within the datacenter.
Statement 9. An apparatus comprising: a processing device; and a memory, operatively coupled to the processing device, storing instructions that, when executed, perform operations comprising: monitoring a signal representative of a load presented at a common point of coupling of datacenter power and an electrical grid; identifying, from the signal, a spectral content of the load; and dynamically adjusting a power floor of the load based on the spectral content of the load.
Statement 10. The apparatus of any combination of one or more of the statements above, wherein the memory further stores instructions that, when executed, perform operations comprising: determining a magnitude of load; and dynamically adjusting the power floor of the load only if the magnitude exceeds a predefined level.
Statement 11. The apparatus of any combination of one or more of the statements above, wherein the identifying, from the signal, the spectral content of the load comprises calculating the spectral content with a Fast Fourier Transform (FFT) device.
Statement 12. The apparatus of any combination of one or more of the statements above, wherein the memory further stores instructions that, when executed, perform operations comprising: capturing, over a period of time, a plurality of samples of a magnitude of the load; calculating, from the plurality of samples, a frequency of the load; identifying, for the calculated frequency, one of a plurality of predefined frequency ranges, wherein each of the plurality of predefined frequency ranges is associated with a different power floor level; and setting the power floor to the power floor level associated with the identified predefined frequency range.
Statement 13. The apparatus of any combination of one or more of the statements above, wherein the memory further stores instructions that, when executed, perform operations comprising initializing a power floor at an initial permissible level, wherein: identifying, from the signal, the spectral content of the load further comprises periodically determining a frequency of the load; and dynamically adjusting a power floor of the load further comprises reducing the power floor of the load by a predetermined amount based on the determined frequency of the monitored load being within a range of permissible frequencies.
Statement 14. The apparatus of any combination of one or more of the statements above, wherein adjusting the power floor further comprises: instructing a datacenter control plane to modify a power floor of one or more power consuming devices of the datacenter, wherein the datacenter control plane is coupled for data communications to a plurality of power consuming devices within the datacenter.
Statement 15. A system comprising: a plurality of power consuming devices; and a power monitoring device operatively coupled, in a closed loop, to the plurality of power consuming devices and a common point of coupling of datacenter power and an electrical grid, wherein the power monitoring device performs operations comprising: monitoring a signal representative of a load presented at the common point of coupling; identifying, from the signal, a spectral content of the load; and dynamically adjusting a power floor of the load based on the spectral content of the load.
Statement 16. The system of any combination of one or more of the statements above, wherein the power monitoring device further performs operations comprising: determining a magnitude of load; and dynamically adjusting the power floor of the load only if the magnitude exceeds a predefined level.
Statement 17. The system of any combination of one or more of the statements above, wherein identifying, from the signal, the spectral content of the load comprises calculating the spectral content with a Fast Fourier Transform (FFT) device.
Statement 18. The system of any combination of one or more of the statements above, wherein the power monitoring device further performs operations comprising: capturing, over a period of time, a plurality of samples of a magnitude of the load; calculating, from the plurality of samples, a frequency of the load; identifying, for the calculated frequency, one of a plurality of predefined frequency ranges, wherein each of the plurality of predefined frequency ranges is associated with a different power floor level; and setting the power floor to the power floor level associated with the identified predefined frequency range.
Statement 19. The system of any combination of one or more of the statements above, wherein the power monitoring device further performs operations comprising initializing a power floor at an initial permissible level, wherein: identifying, from the signal, the spectral content of the load further comprises periodically determining a frequency of the load; and dynamically adjusting a power floor of the load further comprises reducing the power floor of the load by a predetermined amount based on the determined frequency of the monitored load being within a range of permissible frequencies.
Statement 20. The system of any combination of one or more of the statements above, wherein adjusting the power floor further comprises: instructing a datacenter control plane to modify a power floor of one or more power consuming devices of the datacenter, wherein the datacenter control plane is coupled for data communications to the plurality of power consuming devices.

Although some embodiments are described largely in the context of a system, method, or in some other way, readers will recognize that embodiments of the present disclosure may also take the form of a computer program product disposed upon computer readable storage media for use with any suitable processing system. Such computer-readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory (RAM), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of dynamically controlling datacenter load, comprising:
monitoring (302) spectral content of a load presented at a common point of coupling between datacenter power and an electrical grid; and
dynamically (304) adjusting a power floor of the load based on the monitored spectral content.

2. The method of claim 1, further comprising:
determining a magnitude of the load; and
dynamically adjusting the power floor of the load only if the magnitude exceeds a predefined threshold.

3. The method of claim 1 or claim 2, wherein monitoring spectral content of the load further comprises calculating the spectral content with a Fast Fourier Transform, FFT, device.

4. The method of any preceding claim, wherein:
monitoring spectral content of the load further comprises capturing, over a period of time, a plurality of samples of a magnitude of the load and calculating, from the plurality of samples, a frequency of the load; and
dynamically adjusting the power floor of the load further comprises:
identifying, for the calculated frequency, one of a plurality of predefined frequency ranges, wherein each of the plurality of predefined frequency ranges is associated with a different power floor level; and
setting the power floor to the power floor level associated with the identified predefined frequency range.

5. The method of any preceding claim, further comprising:
initializing, upon startup of the load, a power floor at an initial permissible level, wherein:
monitoring the spectral content of the load further comprises periodically determining a frequency of the load; and
dynamically adjusting a power floor of the load further comprises reducing the power floor of the load by a predetermined amount based on the determined frequency of the monitored load being within a range of permissible frequencies.

6. The method of claim 5, further comprising:
increasing the power floor of the load by a predetermined amount based on the determined frequency of the monitored load being within a range of impermissible frequencies.

7. The method of claim 6, wherein increasing the power floor further comprises increasing the power floor to the initial permissible level.

8. The method of any preceding claim, wherein adjusting the power floor comprises:
instructing a datacenter control plane to modify a power floor of one or more power consuming devices of the datacenter, wherein the datacenter control plane is coupled for data communications to a plurality of power consuming devices within the datacenter.

9. An apparatus comprising:
a processing device (704); and
a memory (714), operatively coupled to the processing device, storing instructions that, when executed, perform operations comprising:
monitoring a signal representative of a load presented at a common point of coupling of datacenter power and an electrical grid;
identifying, from the signal, a spectral content of the load; and
dynamically adjusting a power floor of the load based on the spectral content of the load.

10. The apparatus of claim 9, wherein the memory further stores instructions that, when executed, perform operations comprising:
determining a magnitude of load; and
dynamically adjusting the power floor of the load only if the magnitude exceeds a predefined level.

11. The apparatus of claim 9 or claim 10, wherein the identifying, from the signal, the spectral content of the load comprises calculating the spectral content with a Fast Fourier Transform, FFT, device.

12. The apparatus of any of claims 9 to 11, wherein the memory further stores instructions that, when executed, perform operations comprising:
capturing, over a period of time, a plurality of samples of a magnitude of the load;
calculating, from the plurality of samples, a frequency of the load;
identifying, for the calculated frequency, one of a plurality of predefined frequency ranges, wherein each of the plurality of predefined frequency ranges is associated with a different power floor level; and
setting the power floor to the power floor level associated with the identified predefined frequency range.

13. The apparatus of any of claims 9 to 12, wherein the memory further stores instructions that, when executed, perform operations comprising initializing a power floor at an initial permissible level, wherein:
identifying, from the signal, the spectral content of the load further comprises periodically determining a frequency of the load; and
dynamically adjusting a power floor of the load further comprises reducing the power floor of the load by a predetermined amount based on the determined frequency of the monitored load being within a range of permissible frequencies.

14. The apparatus of any of claims 9 to 13, wherein adjusting the power floor further comprises:
instructing a datacenter control plane to modify a power floor of one or more power consuming devices of the datacenter, wherein the datacenter control plane is coupled for data communications to a plurality of power consuming devices within the datacenter.

15. A system comprising:
a plurality of power consuming devices; and
a power monitoring device operatively coupled, in a closed loop, to the plurality of power consuming devices and a common point of coupling of datacenter power and an electrical grid, wherein the power monitoring device performs operations comprising:
monitoring a signal representative of a load presented at the common point of coupling;
identifying, from the signal, a spectral content of the load; and
dynamically adjusting a power floor of the load based on the spectral content of the load.
